# DEMANDE DE BREVET EUROPEEN

(11) **EP 1 748 374 A1**
(43) Date de publication de la demande: **31.01.2007**
(21) Numéro de dépôt: 06011030.1
(22) Date de dépôt: 30.05.2006
(51) Int. Cl.: G06F 21/00

(54) **Procédé et dispositif de protection d'une mémoire contre les attaques par injection d'erreur**

(30) Priorité: 08.07.2005 FR 0507309
(71) Demandeur: STMicroelectronics SA, 92210 Montrouge (FR)
(72) Inventeur: Bancel, Frédéric, 13113 Lamanon (FR); Berard, Nicolas, Le Puits Sainte Marie 13530 Trets (FR)
(74) Mandataire: Marchand, André

(57) **Abrégé**

L'invention concerne un procédé pour sécuriser une mémoire (MEM) dans laquelle sont enregistrés des mots binaires accessibles en lecture individuellement, dans lequel une zone mémoire (Z(i)) couvrant une pluralité de mots est définie, une signature cumulative (SA) est calculée en fonction de tous les mots de la zone mémoire, et mémorisée en tant que signature attendue (SM) de la zone mémoire pour vérifier l'intégrité de données lues dans la mémoire. Application à la sécurisation des cartes à puces.

## Description

La présente invention concerne la protection des circuits intégrés contre les attaques par injection d'erreur, et notamment la protection des circuits intégrés présents dans les cartes à puce.

La présente invention concerne plus particulièrement un procédé pour sécuriser l'écriture et la lecture d'une mémoire.

Elle s'applique notamment, mais non exclusivement aux mémoires accessibles à la fois en lecture et en écriture, qu'elles soient volatiles comme les mémoires RAM, ou non volatiles comme les mémoires EEPROM et FLASH.

Ces dernières années, les techniques de piratage des circuits intégrés sécurisés à microprocesseur ont considérablement évolué. A l'heure actuelle, les méthodes de piratage les plus avancées consistent à injecter des erreurs en des points déterminés d'un circuit intégré lors de l'exécution d'opérations dites sensibles, par exemple des opérations d'authentification ou des opérations d'exécution d'un algorithme de cryptographie. De telles attaques par injection d'erreur, appelées également attaques par injection de faute, permettent, en combinaison avec des modèles mathématiques, de déduire la structure d'un algorithme de cryptographie à logique câblée et/ou les clefs secrètes qu'il utilise. L'injection d'erreur peut être faite de diverses manières, en introduisant des perturbations dans la tension d'alimentation du circuit intégré, en introduisant des perturbations dans le signal d'horloge du circuit intégré, ou en exposant le circuit intégré à des radiations ou un faisceau laser, etc. Les mémoires RAM sont particulièrement vulnérables aux perturbations.

Le document US 6 901 552 décrit un procédé d'accès à une mémoire RAM dans lequel un mot de parité ou de CRC (Cyclic Redundancy Check) est calculé et mémorisé pour chaque mot ou groupe de quatre mots de la mémoire. Lors d'un accès en lecture à la mémoire, le mot de contrôle est calculé et comparé avec le mot de contrôle mémorisé pour le mot lu. Si une différence est constatée un signal d'erreur est émis. En écriture, une vérification du mot de contrôle est effectuée, puis un nouveau mot de contrôle est calculé et mémorisé pour le mot à écrire, et le mot à écrire est stocké dans la mémoire.

Il s'avère que la vérification du mot de contrôle et le calcul d'un nouveau mot de contrôle pénalisent d'une manière importante les temps d'accès, notamment en écriture, à la mémoire. Les temps d'accès à la mémoire deviennent excessifs s'il est nécessaire de mettre en oeuvre des calculs de signature cumulative qui sont plus complexes que les calculs de mot de parité ou de CRC.

La présente invention a pour but de protéger une mémoire accessible mot par mot, contre des attaques visant à modifier le contenu de la mémoire. Cet objectif est atteint en prévoyant d'effectuer des vérifications d'intégrité à l'aide de signatures cumulatives calculées sur tous les mots d'une partie de la mémoire.

Plus particulièrement, l'invention prévoit un procédé pour sécuriser une mémoire de données dans laquelle sont enregistrés des mots binaires accessibles en lecture individuellement, comprenant une étape de définition dans la mémoire d'au moins une zone mémoire couvrant une pluralité de mots.

Selon un mode de réalisation de l'invention, l'écriture d'un nouveau mot dans la zone mémoire comprend :
- une étape préalable de lecture de tous les mots d'un ensemble initial de mots présent dans la zone mémoire, et
- des étapes simultanées de calcul d'une signature cumulative courante et de calcul d'une nouvelle signature courante de la zone mémoire en fonction des mots lus dans la mémoire, l'étape de calcul de la nouvelle signature courante comprenant une étape consistant à remplacer à la volée par le nouveau mot, un mot lu qui est destiné à être remplacé dans la mémoire par le nouveau mot.

Selon un mode de réalisation, une action spécifique de protection en écriture est déclenchée si la signature courante ne correspond pas à une signature attendue.

Selon un mode de réalisation, l'écriture d'un nouveau mot dans la zone mémoire comprend une étape de mémorisation de la nouvelle signature courante (SB) en tant que signature attendue (SM) de la zone mémoire.

Selon un mode de réalisation, l'action spécifique de protection en écriture comprend au moins l'une des actions suivantes ou une combinaison des actions suivantes : empêcher l'écriture du nouveau mot dans la mémoire, empêcher la mémorisation d'une nouvelle signature courante en tant que signature attendue, activer un signal d'alarme, bloquer la mémoire en lecture et/ou écriture, ou effacer le contenu de la zone mémoire.

Selon un mode de réalisation, le calcul de la nouvelle signature courante est effectué avant l'écriture du nouveau mot dans la zone mémoire.

Selon un mode de réalisation, le mot lu est remplacé par le nouveau mot au moyen d'un circuit de multiplexage agencé dans un chemin privé de lecture de mots et ayant une première entrée reliée à une sortie de lecture de la mémoire et une seconde entrée reliée à la sortie d'un tampon de mémorisation du nouveau mot.

Selon un mode de réalisation, la lecture d'un mot dans la zone mémoire comprend des étapes de lecture de tous les mots de l'ensemble de mots initial présent dans la zone mémoire, calcul d'une signature courante en fonction de tous les mots lus de l'ensemble de mots initial, et déclenchement d'une action spécifique de protection en lecture si la signature courante ne correspond pas à une signature attendue.

Selon un mode de réalisation, l'action spécifique de protection en lecture comprend au moins l'une des actions suivantes ou une combinaison des actions suivantes : ne pas fournir à l'extérieur de la mémoire le mot lu dans la mémoire, activer un signal d'alarme, bloquer la mémoire en lecture et/ou écriture, ou effacer le contenu de la zone mémoire.

Selon un mode de réalisation, les signatures cumulatives sont calculées avec un algorithme invariable de génération de signature, ou un algorithme utilisant une clef de signature invariable, de sorte qu'une signature courante correspond à une signature attendue si les deux signatures sont identiques.

Selon un mode de réalisation, les mots de la zone mémoire sont lus pendant le calcul de signature cumulative courante, à une cadence plus rapide que la cadence d'écriture ou de lecture d'un mot dans la mémoire.

L'invention concerne également un dispositif de sécurisation d'une mémoire de données dans laquelle sont enregistrés des mots binaires accessibles individuellement en lecture, comprenant des moyens de localisation d'au moins une zone mémoire de la mémoire couvrant une pluralité de mots, des moyens de lecture pour lire tous les mots d'un ensemble initial de mots présent dans la zone mémoire, et un premier circuit de calcul de signature pour calculer une signature cumulative en fonction des mots lus dans la zone mémoire.

Selon un mode de réalisation, le dispositif est agencé pour intercepter une commande d'écriture d'un nouveau mot dans la zone mémoire et comprend un second circuit de signature pour calculer une nouvelle signature cumulative courante en fonction des mots lus dans la zone mémoire, et des moyens pour, lors de l'écriture d'un nouveau mot dans la zone mémoire, appliquer les mots lus au premier circuit de calcul de signature pour calculer une signature cumulative courante, et appliquer simultanément les mots lus au second circuit de signature pour calculer une nouvelle signature cumulative courante en remplaçant à la volée par le nouveau mot, le mot lu qui est destiné à être remplacé dans la mémoire par le nouveau mot.

Selon un mode de réalisation, le dispositif comprend des moyens pour mémoriser la nouvelle signature courante en tant que signature attendue de la zone mémoire.

Selon un mode de réalisation, le dispositif comprend des moyens pour déclencher une action spécifique de protection en écriture de la mémoire si la signature courante ne correspond pas à une signature attendue.

Selon un mode de réalisation, l'action spécifique de protection en écriture comprend au moins l'une des actions suivantes ou une combinaison des actions suivantes : empêcher l'écriture du nouveau mot dans la mémoire, empêcher la mémorisation d'une nouvelle signature courante en tant que signature attendue, activer un signal d'alarme, bloquer la mémoire ou effacer le contenu de la zone mémoire.

Selon un mode de réalisation, le calcul de la nouvelle signature courante est effectué avant l'écriture du nouveau mot dans la zone mémoire.

Selon un mode de réalisation, le dispositif comprend un tampon de mémorisation du nouveau mot à enregistrer dans la mémoire, un moyen de mémorisation de l'adresse dans la mémoire du nouveau mot à enregistrer, un compteur d'adresse pour balayer les adresses de tous les mots de l'ensemble de mots initial, et appliquer l'adresse balayée à la mémoire en tant qu'adresse de lecture, un circuit de comparaison de l'adresse balayée appliquée à la mémoire et de l'adresse du nouveau mot à enregistrer, et un circuit de multiplexage comportant une première entrée reliée à une sortie de lecture de la mémoire, une seconde entrée reliée à la sortie du tampon de mémorisation du nouveau mot, une sortie reliée au second circuit de signature, et une entrée de contrôle commandée par le circuit de comparaison, de manière que le circuit de multiplexage substitue, à l'entrée du second circuit de signature, le nouveau mot au mot destiné à être remplacé dans la mémoire, lorsque l'adresse de lecture fournie par le compteur d'adresse est égale à l'adresse du nouveau mot à enregistrer.

Selon un mode de réalisation, le dispositif est agencé pour intercepter une commande de lecture d'un mot dans la zone mémoire appliquée à la mémoire et effectuer, préalablement à la fourniture du mot à lire, les opérations suivantes : lire tous les mots de l'ensemble de mots initial présent dans la zone mémoire, appliquer les mots lus au premier circuit de calcul de signature pour calculer une signature cumulative courante en fonction des mots lus, et déclencher une action spécifique de protection en lecture si la signature courante ne correspond pas à une signature attendue.

Selon un mode de réalisation, l'action spécifique de protection en écriture comprend au moins l'une des actions suivantes ou une combinaison des actions suivantes : ne pas fournir à l'extérieur de la mémoire le mot lu dans la mémoire, activer un signal d'alarme, bloquer la mémoire ou effacer le contenu de la zone mémoire.

Selon un mode de réalisation, les signatures cumulatives sont calculées avec un algorithme invariable de génération de signature, ou un algorithme utilisant une clef de signature invariable, de sorte qu'une signature courante correspond à une signature attendue si les deux signatures sont identiques.

Selon un mode de réalisation, la zone mémoire est balayée pendant le calcul de signature cumulative courante, à une cadence plus rapide que la cadence d'écriture ou de lecture d'un mot dans la mémoire.

Ces objets, caractéristiques et avantages ainsi que d'autres de la présente invention seront exposés plus en détail dans la description suivante de l'invention faite à titre non limitatif en relation avec les figures jointes parmi lesquelles :
- la figure 1 représente sous forme de blocs un système de traitement comportant une mémoire et un dispositif de sécurisation de la mémoire, selon l'invention ;
- la figure 2 représente un dispositif de sécurisation d'une mémoire, selon l'invention ;
- la figure 3 représente un circuit de gestion d'adresse du dispositif de la figure 2 ;
- les figures 4 et 5 sont des organigrammes illustrant un procédé de sécurisation d'une mémoire, selon l'invention.

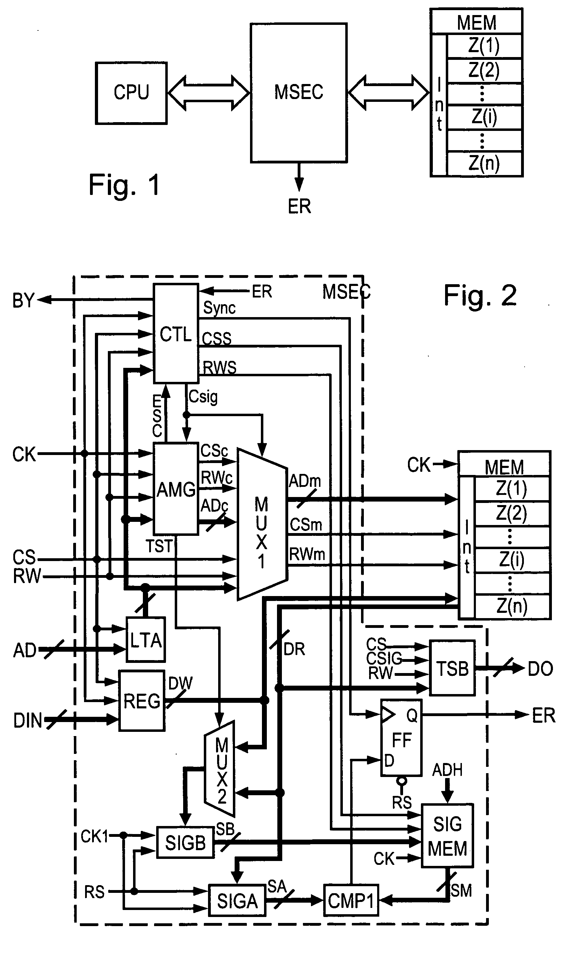

La figure 1 représente un dispositif de sécurisation d'une mémoire MSEC, selon l'invention, agencé entre une mémoire MEM et des circuits utilisant la mémoire, tels qu'une unité de traitement CPU. La mémoire est de type accessible mot par mot, avec par exemple des mots de 8, 16 ou 32 bits, et est divisée en zones Z(1), Z(2), ... Z(i), ... Z(n). Le dispositif MSEC est connecté à la mémoire et à l'unité de traitement de manière à intercepter les ordres d'écriture et de lecture de la mémoire, émis par l'unité de traitement. Le dispositif MSEC commande la mémoire pour exécuter ces ordres et transmet le mot lu en réponse à un ordre de lecture d'un mot dans la mémoire.

La figure 2 représente un mode de réalisation en logique câblée du dispositif de sécurisation MSEC selon l'invention. Le dispositif MSEC comprend un registre d'adresse LTA qui conserve l'adresse AD appliquée en entrée du dispositif MSEC à la place de la mémoire MEM durant toute une opération d'accès à la mémoire, y compris le calcul de signature. Le registre d'adresse LTA comprend par exemple des bascules D ou des verrous mémorisant chacun des bits constituant l'adresse AD appliquée en entrée du dispositif MSEC.

Le dispositif MSEC comprend un circuit de gestion d'adresse AMG comportant des entrées recevant les signaux d'activation CS, et de sélection d'écriture ou de lecture RW, reçus par le dispositif de sécurisation MSEC à la place de la mémoire MEM, et une entrée d'adresse connectée au registre d'adresse LTA.

Le dispositif MSEC comprend un premier multiplexeur MUX1 comportant deux groupes d'entrées. Les entrées d'un premier groupe d'entrées sont connectées respectivement aux entrées de signaux d'activation CS, et de sélection d'écriture ou de lecture RW du dispositif MSEC, et au registre d'adresse LTA. Les entrées du second groupe d'entrées sont connectées à des sorties d'adresse ADc, d'activation CSc, et de sélection d'écriture ou de lecture RWc du circuit de gestion d'adresse AMG. Le multiplexeur MUX1 comprend des sorties d'adresse ADm, d'activation CSm et de sélection d'écriture ou de lecture RWm, connectées à une interface Int de la mémoire MEM.

Le dispositif de sécurisation MSEC comprend en outre un premier circuit de calcul de signature SIGA pour calculer une signature courante. Une entrée de mot du circuit de calcul de signature SIGA reçoit les mots DR lus dans la mémoire MEM. Le circuit de calcul de signature SIGA comprend une sortie connectée à un comparateur CMP1 assurant la comparaison de la signature courante calculée par le circuit SIGA avec une signature attendue SM mémorisée dans une mémoire de stockage de signature SIGMEM. La sélection d'une signature attendue dans la mémoire de stockage de signature SIGMEM est effectuée à l'aide des bits de poids fort ADH de l'adresse AD appliquée en entrée du dispositif MSEC. La sortie du comparateur CMP1 est connectée à l'entrée D d'une bascule FF comportant une entrée de signal d'horloge et une sortie non inverseuse Q fournissant un signal indicateur d'erreur ER. L'état du signal ER correspond à celui du signal appliqué sur l'entrée D de la bascule à la suite d'une impulsion appliquée à l'entrée de signal d'horloge de la bascule.

Les mots DR lus dans la mémoire MEM sont appliqués à une sortie DO du dispositif MSEC par l'intermédiaire d'un tampon trois états TSB, en réponse à un ordre de lecture destiné à la mémoire. A cet effet, le tampon TSB reçoit les signaux CS, RW, CSIG en tant que signaux de contrôle et recopie sur la sortie DO les mots lus dans la mémoire MEM lorsque ces signaux de contrôle indiquent que la mémoire est sélectionnée en lecture et que le calcul de signature n'est pas actif. Dans le cas contraire, la sortie du tampon est dans l'état haute impédance, de sorte que les données lues dans la mémoire MEM ne sont pas accessibles sur la sortie DO.

Le dispositif MSEC comprend également un circuit de contrôle CTL pour commander le circuit de gestion d'adresse AMG, la mémoire de stockage de signature SIGMEM et la bascule FF. Le circuit de contrôle CTL comprend des entrées recevant respectivement les signaux d'activation CS, et de sélection d'écriture ou de lecture RW, appliqués en entrée du dispositif MSEC et l'adresse mémorisée dans le registre d'adresse LTA. Le circuit de contrôle applique un signal d'activation de calcul de signature Csig au circuit AMG et à l'entrée de sélection du multiplexeur MUX1, et reçoit du circuit AMG un signal ESC de fin de calcul de signature. Le circuit de contrôle applique également un signal de synchronisation Sync à l'entrée de signal d'horloge de la bascule FF, et des signaux d'activation CSS et de sélection d'écriture ou de lecture RWS à la mémoire SIGMEM. Le circuit de contrôle gère un signal d'occupation de la mémoire BY qui est transmis en sortie du dispositif MSEC.

Avantageusement, le dispositif MSEC comprend un second circuit de calcul de signature SIGB pour calculer une nouvelle signature courante. Le circuit SIGB reçoit les mots DR lus dans la mémoire MEM par l'intermédiaire d'un second multiplexeur MUX2 dont une autre entrée est connectée à la sortie de mot DW d'un registre de mot REG. La sortie du circuit de calcul d'une nouvelle signature SIGB est connectée à une entrée de mot de la mémoire de stockage de signature SIGMEM. Le multiplexeur MUX2 comprend une entrée de sélection recevant un signal de résultat de test TST fourni par le circuit AMG. Le registre de mot REG comprend une entrée de mot connectée à une entrée de mot DIN du dispositif MSEC, à laquelle est appliqué un mot à écrire dans la mémoire MEM. La sortie de mot DW du registre REG est également connectée à une entrée de mot à écrire de la mémoire. Le registre de mot est par exemple constitué par des bascules D ou des verrous.

Un signal d'horloge CK appliqué en entrée du dispositif MSEC est distribué à la mémoire MEM, à la mémoire de stockage de signature SIGMEM, au registre REG, et aux circuits de gestion d'adresse AMG et de contrôle CTL.

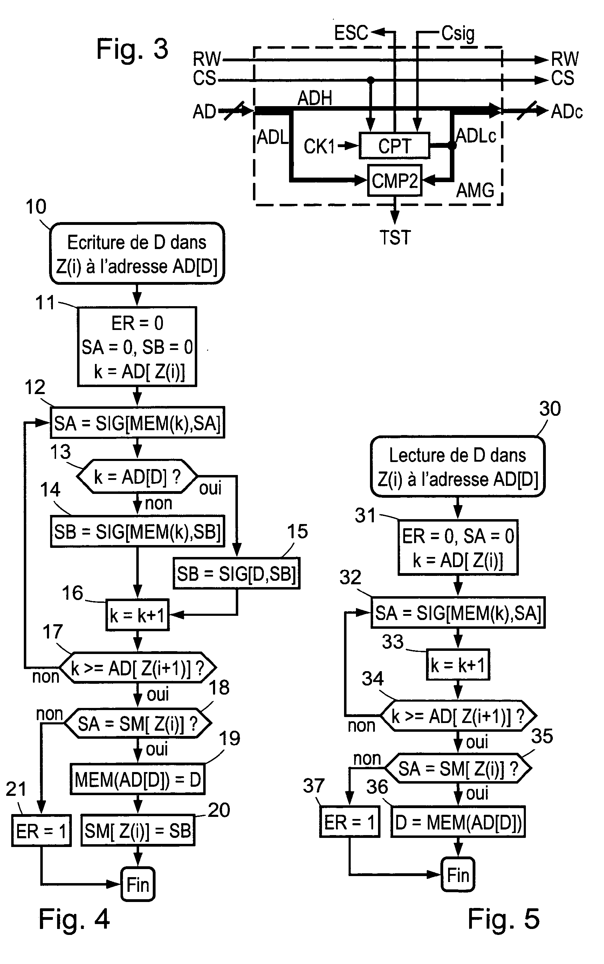

Un mode de réalisation du circuit de gestion d'adresse AMG est représenté sur la figure 3. Sur cette figure, le circuit AMG comprend un compteur CPT qui est initialisé sur changement d'état du signal de sélection d'écriture ou de lecture RW appliqué en entrée du circuit de gestion d'adresse. Le compteur CPT est déclenché sur changement d'état du signal d'activation de signature Csig émis par le circuit de contrôle CTL. Le compteur CPT est dimensionné pour générer sur une sortie ADLc successivement toutes les adresses d'une zone mémoire Z(i). Le circuit AMG fournit sur sa sortie d'adresse ADc une adresse dont les bits de poids fort correspondent aux bits de poids fort ADH de l'adresse appliquée en entrée du circuit de gestion d'adresse, et dont les bits de poids faible sont fournis par la sortie ADLc du compteur CPT. La fréquence de comptage est fournie par un signal d'horloge CK1 qui est par exemple le signal d'horloge CK appliqué en entrée du circuit AMG.

De préférence, la fréquence du signal d'horloge de comptage est un multiple de celle du signal d'horloge CK appliqué en entrée du circuit de gestion d'adresse, pour lire plus rapidement les mots d'une zone mémoire Z(i) lors du calcul de la signature de cette zone mémoire. Dans ce cas, le signal d'horloge CK1 doit également être appliqué aux circuits de calcul de signature SIGA et SIGB pour synchroniser le calcul de signature avec le balayage de la zone mémoire Z(i).

Lorsque la dernière adresse de la zone mémoire Z(i) est atteinte, le compteur CPT fournit un signal de fin de comptage qui est appliqué sur la sortie de signal de fin de calcul de signature ESC du circuit de gestion d'adresse AMG.

Par ailleurs, le circuit AMG comprend un comparateur CMP2 dont une première entrée reçoit les bits de poids faible ADL de l'adresse appliquée en entrée du circuit de gestion d'adresse, et une seconde entrée est connectée à la sortie ADLc du compteur. Le comparateur CMP2 fournit un signal représentatif du résultat de la comparaison sur la sortie TST du circuit de gestion d'adresse. Ce signal indique si l'adresse ADc en sortie du circuit AMG correspond ou non à l'adresse AD mémorisée dans le registre d'adresse LTA.

Les signatures attendues des zones mémoire Z(i) sont calculées et mémorisées dans la mémoire de stockage de signature SIGMEM, par exemple à l'initialisation du dispositif MSEC. Les circuits de calcul de signature SIGA et SIGB sont initialisés au début d'un calcul de signature par un signal d'initialisation RS qui peut être le signal CS d'activation de la mémoire ou le signal Csig. Le signal d'initialisation est également appliqué à l'entrée d'initialisation de la bascule FF, pour initialiser l'état de la bascule.

Lors de la réception d'un ordre d'écriture, un mot à enregistrer DIN et une adresse d'écriture sont présents respectivement sur les entrées de mot DIN et d'adresse AD du dispositif de sécurisation MSEC, et les signaux d'activation CS et de sélection d'écriture ou de lecture RW du dispositif sont respectivement à 1 et 0. Le mot à enregistrer, présent sur l'entrée de mot DIN est mémorisé dans le registre de mot REG. De même, l'adresse présente sur l'entrée d'adresse AD est mémorisée dans le registre d'adresse LTA. Le circuit de contrôle CTL déclenche le calcul de signature, à l'aide du signal Csig appliqué au circuit de gestion d'adresse AMG et au multiplexeur MUX1. Le multiplexeur MUX1 sélectionne alors les sorties ADc, RWc et CSc du circuit AMG et les applique à l'interface Int de la mémoire MEM.

Parallèlement, sur changement d'état du signal Csig, le compteur CPT du circuit AMG est activé et balaye la zone mémoire Z(i) en fournissant à chaque cycle du signal d'horloge CK1 successivement l'adresse ADc de tous les mots de la zone Z(i) à laquelle appartient l'adresse d'écriture mémorisée dans le registre d'adresse LTA. La zone Z(i) est sélectionnée par les bits de poids fort ADH de l'adresse appliquée en entrée AD du dispositif MSEC. La mémoire MEM fournit alors sur sa sortie de mot DR successivement tous les mots enregistrés dans la zone mémoire Z(i) aux circuits de calcul de signature SIGA, SIGB. Durant le balayage des mots de la zone mémoire Z(i), lorsque l'adresse ADc générée par le compteur CPT du circuit de gestion AMG est égale à l'adresse AD présente à l'entrée du dispositif MSEC, le signal TST en sortie du circuit de gestion d'adresse change d'état et commande le multiplexeur MUX2 pour que celui-ci applique en entrée du circuit de calcul de signature SIGB, non pas le mot lu dans la mémoire, mais le mot mémorisé dans le registre REG. Au cycle du signal d'horloge CK1 suivant, le signal TST change d'état, de sorte que les mots suivants, lus dans la zone mémoire Z(i) sont appliqués au circuit de calcul de signature SIGB. De cette manière, la zone mémoire Z(i) n'est lue qu'une seule fois pour calculer simultanément la signature courante SA et la nouvelle signature courante SB, le mot lu dans la zone mémoire à l'adresse d'écriture étant remplacé à la volée par le mot à écrire pour le calcul de la nouvelle signature SB.

Au terme du comptage effectué par le compteur CPT, les circuits SIGA et SIGB de calcul de signature fournissent respectivement la signature courante SA de la zone mémoire Z(i), c'est-à-dire représentative du contenu courant de la zone mémoire, et une nouvelle signature courante SB de la zone mémoire, dans laquelle le mot à enregistrer figurant dans le registre de mot REG, remplace le mot figurant dans la mémoire MEM à l'adresse d'écriture fournie par le registre d'adresse LTA. La nouvelle signature courante SB est ainsi représentative du contenu de la zone mémoire tel qu'il le sera après écriture du mot à enregistrer à l'adresse d'écriture.

Egalement au terme du comptage, le circuit de gestion d'adresse AMG envoie le signal de fin de calcul de signature ESC au circuit de contrôle CTL. Dès réception de ce signal, le circuit CTL commande la mémoire de stockage de signature SIGMEM à l'aide des signaux de sélection CSS et de lecture RWS pour lire la signature attendue SM de la zone mémoire Z(i), et applique à la bascule FF le signal de synchronisation Sync. La signature courante SA provenant du circuit de calcul de signature SIGA et la signature attendue SM lue dans la mémoire de stockage de signature SIGMEM sont alors appliquées aux entrées du comparateur CMP1.

Le circuit de contrôle CTL change l'état du signal Csig pour commander le multiplexeur MUX1 afin d'appliquer à l'interface Int de la mémoire MEM, les signaux CS et RW appliqués en entrée du dispositif MSEC, ainsi que l'adresse mémorisée dans le registre d'adresse LTA. De cette manière, le mot figurant dans le registre REG est enregistré dans la mémoire MEM. Le circuit de contrôle commande également, à l'aide des signaux CSS et RWS, la mémoire de stockage de signature SIGMEM pour y enregistrer la nouvelle signature courante SB en tant que signature attendue SM de la zone mémoire Z(i). L'adresse d'écriture dans la mémoire SIGMEM est donnée par les bits de poids fort ADH de l'adresse mémorisée dans le registre d'adresse LTA.

Si un ou plusieurs mots enregistrés dans la zone mémoire Z(i) ont subi une altération, la signature courante SA fournie par le circuit de calcul de signature SIGA est différente de la signature attendue SM lue dans la mémoire de signature. Dans ce cas, le signal de sortie du comparateur CMP1 indique une erreur de signature et provoque un changement d'état de la bascule FF à la suite de l'application du signal de synchronisation Sync. Le signal indicateur ER en sortie du dispositif MSEC indique alors une erreur.

Au contraire, si la signature courante SA est égale à la signature attendue SM lue dans la mémoire de stockage de signature SIGMEM, le signal de sortie du comparateur CMP1 n'indique pas d'erreur et ne déclenche pas de changement d'état de la bascule FF.

L'écriture du mot dans la mémoire MEM, ainsi que la mise à jour de la mémoire de stockage de signature SIGMEM peuvent être effectuées systématiquement, même en cas de détection d'erreur, sachant que le signal indicateur d'erreur ER fourni par le dispositif MSEC peut par exemple déclencher l'activation d'un signal d'alarme, l'effacement de la zone mémoire Z(i) ou de l'ensemble de la mémoire MEM, ou encore le blocage de la mémoire en lecture et/ou écriture. Alternativement, le signal indicateur d'erreur ER est appliqué en entrée du circuit de contrôle CTL qui ne commande pas l'écriture du mot dans la mémoire et la mise à jour de la mémoire de signature si le signal ER indique une erreur.

Lors de la réception d'un ordre de lecture d'un mot dans la mémoire MEM, une adresse de lecture est présente à l'entrée AD du dispositif MSEC et mémorisée dans le registre d'adresse LTA. Les signaux d'entrée CS et RW du dispositif sont à 1. Ces signaux sont appliqués à la mémoire MEM par le multiplexeur MUX1. La mémoire MEM fournit alors le mot lu sur la sortie DO du dispositif.

Avant ou après l'exécution de l'ordre de lecture de la mémoire MEM, le circuit de contrôle CTL commande le circuit de gestion d'adresse AMG et le multiplexeur MUX1 pour effectuer un calcul de signature de la zone mémoire Z(i) dans laquelle se trouve l'adresse lue. Le calcul de signature est effectué de la même manière que durant l'exécution d'un ordre d'écriture. A la fin du calcul de signature, la signature courante SA fournie par le circuit de calcul de signature SIGA et la signature attendue SM de la zone mémoire Z(i) sont appliquées à l'entrée du comparateur CMP1. Selon le résultat de la comparaison effectuée par le comparateur CMP1, le signal indicateur d'erreur ER en sortie du dispositif MSEC indique ou non une erreur.

Il est à noter que durant l'exécution d'un ordre de lecture de la mémoire MEM, le second circuit de calcul de signature SIGB produit également une signature SB, mais celle-ci n'est pas sauvegardée dans la mémoire SIGMEM.

Le signal d'occupation de la mémoire BY généré par le circuit de contrôle CTL est à l'état occupé pendant l'exécution d'ordres d'écriture et de lecture et pendant les calculs de signature correspondants, pour indiquer à l'unité de traitement CPU accédant à la mémoire MEM que celle-ci est occupée et ne peut pas exécuter de nouveaux ordres d'écriture ou de lecture.

La division de la mémoire MEM en zones mémoire Z(i) a une incidence à la fois sur la taille de la mémoire de stockage de signature SIGMEM et sur le temps de calcul d'une signature. En effet, plus le nombre de zones mémoire est élevé, plus leur taille est réduite, et plus le nombre de signatures attendues à mémoriser dans la mémoire SIGMEM est élevé. Cependant, le temps de calcul d'une signature sera d'autant plus court que la taille des zones mémoires est réduite.

Les figures 4 et 5 illustrent respectivement une procédure d'écriture 10 et une procédure de lecture 30 dans une mémoire MEM conformément au procédé selon l'invention. Ces procédures sont exécutées par un dispositif de sécurisation comportant une unité de traitement, à chaque accès respectivement en écriture et en lecture, à une adresse AD[D] dans une zone Z(i) de la mémoire, D étant un mot à lire ou à écrire dans la mémoire.

A la première étape 11 de la procédure d'écriture 10 du mot D, un indicateur d'erreur ER est initialisé à une valeur indiquant qu'aucune erreur n'a été détectée. Le dispositif MSEC initialise également la valeur k d'un compteur à l'adresse AD[Z(i)] de début de la zone mémoire Z(i), ainsi que des variables SA, SB prévues pour recevoir respectivement les valeurs cumulatives d'une signature courante et d'une nouvelle signature courante de la zone Z(i).

A l'étape 12 suivante, le dispositif MSEC calcule la valeur suivante de la signature cumulative courante SA à partir de la valeur précédente de la signature cumulative courante SA et du mot MEM(k) lu dans la mémoire à l'adresse donnée par la valeur k du compteur. A l'étape 13 suivante, le dispositif MSEC compare la valeur k du compteur à l'adresse d'écriture AD[D] du mot D à écrire dans la zone mémoire Z(i). Si la valeur k du compteur est différente de l'adresse d'écriture, le dispositif MSEC calcule la valeur suivante de la nouvelle signature courante SB à partir de la valeur précédente de la signature SB et du mot MEM(k) lu précédemment dans la mémoire. Si par contre la valeur k du compteur est égale à l'adresse d'écriture, la valeur cumulative suivante de la nouvelle signature courante SB est calculée à partir de la valeur précédente de la nouvelle signature et de la valeur du mot D à écrire dans la mémoire. Le mot D à écrire dans la zone mémoire Z(i) remplace donc dans le calcul de la signature SB le mot enregistré dans la mémoire à l'adresse d'écriture.

A l'étape 16 suivante, la valeur k du compteur est incrémentée de 1 pour pointer sur le mot enregistré à l'adresse suivante dans la zone mémoire Z(i). A l'étape 17 suivante, le dispositif MSEC teste si la fin de la zone mémoire Z(i) est atteinte, par exemple en comparant la valeur k du compteur à l'adresse de début de la zone suivante Z(i+1). Si la fin de la zone mémoire Z(i) n'est pas atteinte, la procédure se poursuit à l'étape 12 où le dispositif MSEC calcule les valeurs suivantes de la signature cumulative courante SA et de la nouvelle signature cumulative SB. Dans le cas contraire, la procédure se poursuit à l'étape 18, au cours de laquelle le dispositif MSEC lit la signature attendue SM[Z(i)] de la zone mémoire Z(i) dans une zone mémoire SIGMEM réservée au stockage de signatures, et compare la signature courante SA obtenue avec la signature attendue lue. Si la signature courante SA est égale à la signature attendue, le dispositif MSEC enregistre le mot D dans la zone mémoire Z(i) à l'adresse AD[D] et la signature attendue de la zone mémoire Z(i) est mise à jour dans la zone mémoire SIGMEM avec la valeur de la nouvelle signature cumulative SB,. Par contre, si la signature courante SA est différente de la signature attendue, la valeur de l'indicateur d'erreur ER est modifiée pour signaler une erreur.

La procédure de lecture 30 se déroule d'une manière sensiblement identique à la procédure d'écriture 10, mis à part que lors de la lecture d'un mot dans la mémoire, la signature de la mémoire ne change pas. Il n'est donc pas nécessaire de calculer une nouvelle signature courante.

A la première étape 31 de la procédure de lecture 30 illustrée sur la figure 4, le dispositif de sécurisation MSEC initialise l'indicateur d'erreur ER à une valeur indiquant qu'aucune erreur n'a été détectée. Il initialise également la valeur k du compteur à l'adresse AD[Z(i)] de début de la zone mémoire Z(i), ainsi que la valeur de la signature cumulative courante SA.

A l'étape 32 suivante, le dispositif MSEC calcule la valeur suivante de la signature cumulative courante SA à partir de la valeur précédente de la signature SA et du mot MEM(k) lu dans la mémoire à l'adresse donnée par la valeur k du compteur.

A l'étape 33 suivante, la valeur k du compteur est incrémentée de 1 pour pointer sur le mot situé à l'adresse suivante dans la mémoire. A l'étape 34 suivante, le dispositif de sécurisation MSEC teste si la fin de la zone mémoire Z(i) est atteinte par la valeur k du compteur. Si la fin de la zone mémoire Z(i) n'est pas atteinte, la procédure se poursuit à l'étape 32 où la valeur suivante de la signature cumulative courante SA est calculée. Dans le cas contraire, la procédure se poursuit à l'étape 35, au cours de laquelle le dispositif de sécurisation MSEC lit la signature attendue SM[Z(i)] de la zone mémoire Z(i) dans la zone mémoire SIGMEM, et compare la signature courante SA avec la signature attendue. Si la signature courante SA est égale à la signature attendue, le mot D est lu dans la zone mémoire Z(i) à l'adresse AD[D]. Par contre, si la signature courante SA est différente de la signature attendue, la valeur de l'indicateur d'erreur ER est modifiée pour signaler une erreur.

Il apparaîtra clairement à l'homme de l'art que le procédé et le dispositif selon l'invention sont susceptibles de diverses variantes, notamment en ce qui concerne les mesures prises lors de la détection d'une incohérence entre une signature courante et une signature attendue. Il n'est ainsi pas nécessaire d'empêcher l'écriture du mot et la mise à jour de la mémoire de signature en cas de détection d'une incohérence entre la signature attendue et la signature courante calculée.

L'ordre des opérations de lecture d'un mot dans la mémoire et de vérification de signature peut également être inversé. Ainsi, le mot lu peut être fourni à l'unité de traitement systématiquement, la vérification de signature produisant simplement un signal ER représentatif d'une erreur éventuelle de signature qui est ensuite exploité par l'unité de traitement connectée au dispositif. En cas de détection d'une incohérence de signature, toute mesure appropriée peut ainsi être prise par le dispositif ou par l'unité de traitement.

Par ailleurs, tout type d'algorithme de calcul de signature cumulatif peut être employé pour déterminer la signature d'une zone mémoire. Ainsi, l'algorithme de calcul de signature peut être invariable ou utiliser une clé de signature invariable. Dans un mode de réalisation avantageux de l'invention, la taille des signatures obtenues est identique à celle des mots, que ceux-ci comportent 8, 16 ou 32 bits.

D'une manière générale, le mode de comparaison appliqué par le comparateur de signatures CMP1 est adapté à l'algorithme de calcul de signature choisi, de manière à détecter l'existence d'une correspondance entre la signature courante et la signature attendue révélant l'absence d'erreur. En effet, selon l'algorithme choisi, deux signatures peuvent correspondre et ainsi ne révéler aucune erreur sans être nécessairement identiques.

En outre, comme cela apparaît dans la description qui précède, tout ou partie des fonctions du dispositif de sécurisation MSEC décrites ci-avant peuvent être réalisées d'une manière logicielle, c'est-à-dire à l'aide d'une unité de calcul programmée, distincte ou non de l'unité de traitement CPU qui accède à la mémoire MEM, ou par des circuits logiques.

La mémoire de stockage de signatures SIGMEM peut ne pas être une mémoire spécifique, mais consister simplement en une zone mémoire réservée de la mémoire MEM à sécuriser. D'une manière générale, la mémoire SIGMEM peut être interne ou externe au dispositif de sécurisation MSEC.

## Revendications

1. Procédé pour sécuriser une mémoire de données (MEM) dans laquelle sont enregistrés des mots binaires accessibles en lecture individuellement, comprenant une étape de définition dans la mémoire d'au moins une zone mémoire (Z(i)) couvrant une pluralité de mots,
**caractérisé en ce que** l'écriture d'un nouveau mot (DIN) dans la zone mémoire (Z(i)) comprend :
- une étape préalable de lecture de tous les mots d'un ensemble initial de mots présent dans la zone mémoire, et
- des étapes simultanées de calcul d'une signature cumulative courante (SA) et de calcul d'une nouvelle signature courante (SB) de la zone mémoire en fonction des mots lus dans la mémoire, l'étape de calcul de la nouvelle signature courante (SB) comprenant une étape consistant à remplacer à la volée par le nouveau mot, un mot lu qui est destiné à être remplacé dans la mémoire par le nouveau mot.

2. Procédé selon la revendication 1, dans lequel une action spécifique de protection en écriture est déclenchée si la signature courante (SA) ne correspond pas à une signature attendue (SM).

3. Procédé selon la revendication 1 ou 2, dans lequel l'écriture d'un nouveau mot dans la zone mémoire (Z(i)) comprend la mémorisation de la nouvelle signature courante (SB) en tant que signature attendue (SM) de la zone mémoire

4. Procédé selon l'une des revendications 2 et 3, dans lequel l'action spécifique de protection en écriture comprend au moins l'une des actions suivantes ou une combinaison des actions suivantes : empêcher l'écriture du nouveau mot dans la mémoire (MEM), empêcher la mémorisation d'une nouvelle signature courante (SB) en tant que signature attendue (SM), activer un signal d'alarme (ER), bloquer la mémoire en lecture et/ou écriture, ou effacer le contenu de la zone mémoire (Z(i)).

5. Procédé selon l'une des revendications 1 à 4, dans lequel le calcul de la nouvelle signature courante (SB) est effectué avant l'écriture du nouveau mot dans la zone mémoire (Z(i)).

6. Procédé selon l'une des revendications 1 à 5, dans lequel le mot lu est remplacé par le nouveau mot au moyen d'un circuit de multiplexage (MUX1) agencé dans un chemin privé de lecture de mots (DR) et ayant une première entrée reliée à une sortie de lecture de la mémoire (MEM) et une seconde entrée reliée à la sortie d'un tampon (REG) de mémorisation du nouveau mot.

7. Procédé selon l'une des revendications 1 à 6, dans lequel la lecture d'un mot dans la zone mémoire (Z(i)) comprend des étapes de :
- lecture de tous les mots de l'ensemble de mots initial présent dans la zone mémoire,
- calcul d'une signature courante (SA) en fonction de tous les mots lus de l'ensemble de mots initial, et
- déclenchement d'une action spécifique de protection en lecture si la signature courante ne correspond pas à une signature attendue (SM).

8. Procédé selon la revendication 7, dans lequel l'action spécifique de protection en lecture comprend au moins l'une des actions suivantes ou une combinaison des actions suivantes : ne pas fournir à l'extérieur de la mémoire (MEM) le mot lu dans la mémoire, activer un signal d'alarme (ER), bloquer la mémoire en lecture et/ou écriture, ou effacer le contenu de la zone mémoire (Z(i)).

9. Procédé selon l'une des revendications 1 à 8, dans lequel les signatures cumulatives sont calculées avec un algorithme invariable de génération de signature, ou un algorithme utilisant une clef de signature invariable, de sorte qu'une signature courante correspond à une signature attendue si les deux signatures sont identiques.

10. Procédé selon l'une des revendications 1 à 9, dans lequel les mots de la zone mémoire (Z(i)) sont lus pendant le calcul de signature cumulative courante, à une cadence plus rapide que la cadence d'écriture ou de lecture d'un mot dans la mémoire.

11. Dispositif de sécurisation (MSEC) d'une mémoire de données (MEM) dans laquelle sont enregistrés des mots binaires accessibles individuellement en lecture, comprenant :
- des moyens de localisation d'au moins une zone mémoire (Z(i)) de la mémoire couvrant une pluralité de mots,
- des moyens de lecture pour lire tous les mots d'un ensemble initial de mots présent dans la zone mémoire (Z(i)), et
- un premier circuit de calcul de signature (SIGA) pour calculer une signature cumulative (SA) en fonction des mots lus dans la zone mémoire,
**caractérisé en ce qu'**il est agencé pour intercepter une commande d'écriture d'un nouveau mot dans la zone mémoire (Z(i)), et comprend :
- un second circuit de signature (SIGB) pour calculer une nouvelle signature cumulative courante (SB) en fonction des mots lus dans la zone mémoire (Z(i)), et
- des moyens pour, lors de l'écriture d'un nouveau mot dans la zone mémoire, appliquer les mots lus au premier circuit de calcul de signature (SIGA) pour calculer une signature cumulative courante (SA), et appliquer simultanément les mots lus au second circuit de signature (SIGB) pour calculer une nouvelle signature cumulative courante (SB) en remplaçant à la volée par le nouveau mot, le mot lu qui est destiné à être remplacé dans la mémoire par le nouveau mot.

12. Dispositif selon la revendication 11, comprenant des moyens pour déclencher une action spécifique de protection en écriture de la mémoire si la signature courante (SA) ne correspond pas à une signature attendue (SM).

13. Dispositif selon la revendication 11 ou 12, comprenant des moyens de mémorisation (SIGMEM) pour mémoriser la nouvelle signature courante (SB) en tant que signature attendue (SM) de la zone mémoire (Z(i)).

14. Dispositif selon l'une des revendications 11 à 13, dans lequel l'action spécifique de protection en écriture comprend au moins l'une des actions suivantes ou une combinaison des actions suivantes : empêcher l'écriture du nouveau mot dans la mémoire (MEM), empêcher la mémorisation d'une nouvelle signature courante (SB) en tant que signature attendue (SM), activer un signal d'alarme (ER), bloquer la mémoire ou effacer le contenu de la zone mémoire (Z(i)).

15. Dispositif selon l'une des revendications 13 et 14, dans lequel le calcul de la nouvelle signature courante (SB) est effectué avant l'écriture du nouveau mot dans la zone mémoire (Z(i))

16. Dispositif selon l'une des revendications 11 à 15, comprenant :
- un tampon (REG) de mémorisation du nouveau mot à enregistrer dans la mémoire (MEM),
- un moyen de mémorisation (LTA) de l'adresse dans la mémoire du nouveau mot à enregistrer,
- un compteur d'adresse (CPT) pour balayer les adresses de tous les mots de l'ensemble de mots initial, et appliquer l'adresse balayée à la mémoire en tant qu'adresse de lecture,
- un circuit de comparaison (CMP2) de l'adresse balayée appliquée à la mémoire et de l'adresse du nouveau mot à enregistrer, et
- un circuit de multiplexage (MUX2) comportant:
une première entrée reliée à une sortie de lecture de la mémoire,
une seconde entrée reliée à la sortie du tampon de mémorisation (REG),
une sortie reliée au second circuit de signature (SIGB), et
une entrée de contrôle commandée par le circuit de comparaison, de manière que le circuit de multiplexage substitue, à l'entrée du second circuit de signature (SIGB), le nouveau mot au mot destiné à être remplacé dans la mémoire, lorsque l'adresse de lecture fournie par le compteur d'adresse est égale à l'adresse du nouveau mot à enregistrer.

17. Dispositif selon l'une des revendications 11 à 16, agencé pour intercepter une commande de lecture d'un mot dans la zone mémoire (Z(i)), appliquée à la mémoire (MEM) et effectuer, préalablement à la fourniture du mot à lire, les opérations suivantes :
- lire tous les mots de l'ensemble de mots initial présent dans la zone mémoire,
- appliquer les mots lus au premier circuit de calcul de signature (SIGA) pour calculer une signature cumulative courante (SA) en fonction des mots lus, et
- déclencher une action spécifique de protection en lecture si la signature courante ne correspond pas à une signature attendue (SM).

18. Dispositif selon la revendication 17, dans lequel l'action spécifique de protection en lecture comprend au moins l'une des actions suivantes ou une combinaison des actions suivantes : ne pas fournir à l'extérieur de la mémoire (MEM) le mot lu dans la mémoire, activer un signal d'alarme (ER), bloquer la mémoire ou effacer le contenu de la zone mémoire (Z(i)).

19. Dispositif selon l'une des revendications 11 à 18, dans lequel les signatures cumulatives (SA, SB) sont calculées avec un algorithme invariable de génération de signature, ou un algorithme utilisant une clef de signature invariable, de sorte qu'une signature courante correspond à une signature attendue (SM) si les deux signatures sont identiques.

20. Dispositif selon l'une des revendications 11 à 19, dans lequel la zone mémoire (Z(i)) est balayée pendant le calcul de signature cumulative courante, à une cadence plus rapide que la cadence d'écriture ou de lecture d'un mot dans la mémoire (MEM).
